# EUROPÄISCHE PATENTSCHRIFT

(11) **EP 2 621 856 B1**
(45) Veröffentlichungstag und Bekanntmachung des Hinweises auf die Patenterteilung: **06.06.2018**
(21) Anmeldenummer: 11764156.3
(22) Anmeldetag: 27.09.2011
(51) Int. Cl.: C01B 33/04, C08G 77/60, C23C 18/12

(54) **VERFAHREN ZUR HERSTELLUNG HÖHERER HYDRIDOSILANVERBINDUNGEN**
METHOD FOR PRODUCING HIGHER SILANE COMPOUNDS
PROCÉDÉ DE PRODUCTION DE COMPOSÉS HYDRIDOSILANE SUPÉRIEURS

(30) Priorität: 01.10.2010 DE 102010041842
(43) Veröffentlichungstag der Anmeldung: 07.08.2013
(73) Patentinhaber: Evonik Degussa GmbH, 45128 Essen (DE)
(72) Erfinder: WIEBER, Stephan, 76137 Karlsruhe (DE); PATZ, Matthias, 46240 Bottrop (DE); HESSING, Jutta, 46282 Dorsten (DE); KLATT, Janette, 45665 Recklinghausen (DE)
(86) Internationale Anmeldenummer: PCT/EP2011/066742
(87) Internationale Veröffentlichungsnummer: WO 2012/041837

(56) Entgegenhaltungen:
- EP-A1- 1 357 154
- WO-A1-2010/079842
- WO-A1-2011/104147
- WO-A2-2011/061106
- US-A- 5 700 400
- US-A1- 2006 222 583

## Beschreibung

Die vorliegende Erfindung betrifft ein Verfahren zur schnellen und metallfreien Herstellung höherer Hydridosilanverbindungen aus niederen Hydridosilanverbindungen. Die Metallfreiheit solcher Materialien ist für Halbleiteranwendungen und optoelektronische Bauteile essentiell.

Hydridosilanverbindungen, einschließend Hydridosilane, sind in der Literatur als mögliche Edukte für die Erzeugung von Siliciumschichten beschrieben.

Dabei sind unter Hydridosilanen Verbindungen zu verstehen, die lediglich Silicium- und Wasserstoffatome enthalten. Hydridosilane können prinzipiell gasförmig, flüssig oder fest sein und sind - insbesondere im Falle von Feststoffen - im Wesentlichen löslich in Lösemitteln wie Toluol oder Cyclohexan oder in flüssigen Silanen wie Cyclopentasilan. Als Beispiele seien Disilan, Trisilan, Tetrasilan, Pentasilan, und Neopentasilan genannt. Hydridosilane mit mindestens drei bzw. vier Siliciumatomen können eine lineare, verzweigte oder (ggf. bi-/poly-)cyclische Struktur mit Si-H-Bindungen aufweisen und lassen sich bevorzugt durch die jeweiligen generischen Formeln SiₙH₂ₙ₊₂ (linear bzw. verzweigt; mit n >= 2), SiₙH₂ₙ (cyclisch; mit n = 3 - 20) oder SiₙH₂₍ₙ₋ᵢ₎ (bi- bzw. polycyclisch; n = 4 - 20; i = {Zahl der Cyclen} - 1) beschreiben.

Unter Hydridosilanverbindungen, die keine Hydridosilane sind, sind demgegenüber substituierte Hydridosilane zu verstehen, wobei bevorzugte substituierte Hydridosilanverbindungen Hydridosilane aufweisend Substituenten auf Basis von Elementverbindungen der III., IV. und V. Gruppe des Periodensystems sind, insbesondere solche mit Substituenten -BY₂ (wobei Y unabhängig voneinander gleich -H, -Alkyl, -Phenyl), -CₙR₂ₙ₊₁ (mit R unabhängig voneinander gleich -H, -Alkyl, -Phenyl) und -PR₂ (mit R unabhängig voneinander gleich -H, -Alkyl, -Phenyl, - SiR'₃ mit R' = -Alkyl).

Auch, wenn prinzipiell viele Hydridosilanverbindungen, insbesondere Hydridosilane, für die Siliciumschichtherstellung eingesetzt werden können, hat sich gezeigt, dass nur höhere Hydridosilanverbindungen (insbesondere Hydridosilane), d.h. entsprechende Verbindungen mit mehr als 10 Siliciumatomen, bei Beschichtung üblicher Substrate deren Oberfläche gut bedecken und zu homogenen Schichten mit wenigen Defekten führen können. Aus diesem Grunde sind Verfahren zur Herstellung höherer Hydridosilanverbindungen (insbesondere höherer Hydridosilane) von Interesse. Viele höhere Hydridosilanverbindungen, insbesondere Hydridosilane, lassen sich durch Oligomerisierung niederer Hydridosilanverbindungen, insbesondere niederer Hydridosilane, herstellen. Bei einer solchen Oligomerisierung niederer Hydridosilanverbindungen bzw. Hydridosilane wird formal betrachtet aus zwei gleichen oder unterschiedlichen niederen (ggf. substituierten) Hydridosilan(verbindungs)molekülen nach Abstraktion von Wasserstoff und/oder kleineren Hydridosilylresten ein höheres Hydridosilan(verbindungs)molekül aufgebaut.

So beschreibt zum Beispiel DE 2 139 155 A1 ein Verfahren zur Herstellung von Hydridosilanen durch Pyrolyse von Trisilan, n-Tetrasilan und/oder n-Pentasilan. Dies Verfahren erfordert jedoch einen hohen technischen Aufwand, da bei der Reaktion zunächst das Ausgangssilan im Hochvakuum verdampft wird, die Pyrolyse nachfolgend an einem Glaswollekontakt erfolgt und die Zersetzungsprodukte nachfolgend kondensiert und gaschromatographisch aufgetrennt werden müssen.

EP 630 933 A2 beschreibt ein Verfahren zur Bildung eines Kondensats, das thermisch in ein halbleitendes Material umgewandelt werden kann. Das Kondensat wird über eine Dehydropolymerisationsreaktion eines Hydridosilan-Monomers auf Basis von Monomeren ausgewählt aus Monosilan, Disilan und Trisilan in Gegenwart eines Katalysators umfassend mindestens ein Metall und/oder eine Metallverbindung hergestellt. Nachteilig bei diesem Herstellverfahren ist jedoch, dass der eingesetzte Katalysator aufwändig nach Beendigung der Reaktion entfernt werden muss.

Auch JP 6 128 381 A, US 5 700 400 A und US 5,252,766 A beschreiben katalysatorgestützte Hydridosilansynthesen, nämlich ein Verfahren, das die Umsetzung einer Hydrosilan-Verbindung in Gegenwart eines Übergangsmetalls oder Übergangsmetallkomplexes umfasst. Auch hier ist nachteilig, dass der eingesetzte Katalysator aufwändig nach Beendigung der Reaktion entfernt werden muss. Weiterhin ist die Herstellung der entsprechenden Katalysatorsysteme aufwändig.

US 6,027,705 A beschreibt ein mehrstufiges Verfahren zur Herstellung von Trisilanen oder höheren Silanen aus Mono- oder Disilan. Ein aus einer Umsetzung von Mono- oder Disilan in einer ersten Reaktionsstufe stammendes Kondensat kann in einer zweiten Reaktionszone thermisch (bevorzugt bei Temperaturen von 250 - 450 °C) zu einem Gemisch von Silanen mit höherem Molekulargewicht eingesetzt werden. Problematisch hierbei ist jedoch, dass bei diesen Temperaturen nur ein geringer Anteil an Silanen mit einem hohen Molekulargewicht erzielt werden kann; neben den Edukten Mono- bzw. Disilan sind im Produktgemisch im wesentlichen Silane mit 3 bis 7 Siliciumatomen vorherrschend. Somit ist das Verfahren nicht geeignet zur Synthese höherer Hydridosilanverbindungen, d.h. von Hydridosilanverbindungen mit mindestens 10 Siliciumatomen.

EP 1 357 154 A1 beschreibt Zusammensetzungen "höherer Silane", die ein Polysilan enthalten, das durch Bestrahlen eines photopolymerisierbaren Silans mit UV-Strahlung herstellbar ist. Die Polysilane können ein per MALDI-TOF-MS gemessenes Molekulargewicht von bis zu 1800 g/mol aufweisen, wobei dabei das Maximum der Molekulargewichtsverteilung zwischen 200 und 700 g/mol liegt. Bei dem photopolymerisierbaren Silan, aus dem die Polysilane herstellbar sind, kann es sich um ein Silan der generellen Formel SiₙXₘ (mit n ≥ 3, m ≥ 4, X = H, Halogen) handeln. Bevorzugt einsetzbare Verbindungen sind jedoch cyclische Silane der Formel SiₙX₂ₙ, bi- bzw. polycyclische Strukturen der Formel SiₙH₂ₙ₋₂ und andere Silane mit einer cyclischen Struktur im Molekül. Nachteilig an diesem in Verfahren ist jedoch, dass für eine erfolgreiche Bestrahlung hohe Strahlungsintensitäten erforderlich sind. Weiterhin ist nachteilig, dass der für die Bildung eines homogenen Produkt(gemisch)es erforderliche homogene Energieeintrag schwierig zu kontrollieren ist.

EP 1 640 342 A1 beschreibt Silanpolymere mit einem mittleren Molekulargewicht von 800 bis 5000 g/mol. Zur Herstellung dieser Polymere werden photopolymerisierbare Silane mit Licht eines spezifischen Wellenlängenbereichs bestrahlt. Als photopolymerisierbare Silane eingesetzt werden können Verbindungen aus der Gruppe von Silanen der generellen Formel SiᵢX₂ᵢ₊₂ mit i = 2 - 10, SiⱼH₂ⱼ mit j = 3 - 10, SiₘX₂ₘ₋₂ mit m = 4 - 10 und SiₖHₖ mit k = 6, 8 oder 10. Für die nach diesem Verfahren herstellbaren Silanpolymere bestehen jedoch die gleichen Nachteile wie gegenüber den nach EP 1 357 154 A1 herstellbaren höheren Silane. US 2006/0222583 beschreibt ein Verfahren zur Herstellung von Hydridosilanverbindungen aufweisend 1 bis 7 Siliciumatome, durch thermische Reaktion von mindestens einer niederen Hydridosilanverbindung in Gegenwart mindestens einer Hydridosilanverbindung, welche durch thermische Behandlung niederer Hydridosilane erhalten wurde.

Demgegenüber ist es somit die Aufgabe der vorliegenden Erfindung, die Nachteile des Standes der Technik zu vermeiden. Insbesondere ist es die Aufgabe der vorliegenden Erfindung, ein Verfahren zur Herstellung höherer Hydridosilanverbindungen bereitzustellen, das technisch wenig aufwändig ist und dabei insbesondere nicht auf einem Pyrolyseverfahren basiert und keine aufwändige Metall-Katalysatorsynthese und -entfernung erfordert, sowie die Nachteile der hohen Strahlungsintensitäten und inhomogenen Energieeinträge bei Photopolymerisationsreaktionen vermeidet. Zudem ist es die Aufgabe der vorliegenden Erfindung, einen metall-freien, gut kontrollierbaren und unter milden Bedingungen laufenden Prozess zur Herstellung von höheren Hydridosilanverbindungen bereitzustellen.

Gelöst wird diese Aufgabe vorliegend durch das erfindungsgemäße Verfahren zur Herstellung höherer Hydridosilanverbindungen aus niederen Hydridosilanverbindungen, bei dem mindestens eine niedere Hydridosilanverbindung (I) in Gegenwart mindestens einer Hydridosilanverbindung (II) mit einem gewichtsmittleren Molekulargewicht von mindestens 500 g/mol thermisch zur Reaktion gebracht wird.

Überraschendweiser wurde gefunden, dass durch Zugabe der Hydridosilanverbindung (II) die Reaktion zu höheren Hydridosilanverbindungen erheblich beschleunigt werden kann. Demnach kann der initiale Anteil von Hydridosilanverbindung (II) als Schablone und Selbst-Katalysator betrachtet werden. Vorteilig an diesem Verfahren ist zudem, dass keine Zersetzung, Trübung oder Verfärbung der höheren Hydridosilanverbindungen durch lange Reaktionszeiten stattfindet. Weiterhin kann dadurch ein Prozess mit guter Raum-Zeit-Ausbeute bereitgestellt werden.

Der Begriff der Hydridosilanverbindungen schließt dabei sowohl Hydridosilane, d.h. Verbindungen, die lediglich Silicium- und Wasserstoffatome enthalten, als auch substituierte Hydridosilanverbindungen ein, wobei bevorzugte substituierte Hydridosilanverbindungen Hydridosilane aufweisend Substituenten auf Basis von Elementverbindungen der III., IV. und V. Gruppe des Periodensystems sind, insbesondere solche mit Substituenten -BY₂ (wobei Y unabhängig voneinander gleich -H, -Alkyl, -Phenyl), -CₙR₂ₙ₊₁ (mit R unabhängig voneinander gleich -H, -Alkyl, Phenyl) und -PR₂ (mit R unabhängig voneinander gleich -H, -Alkyl, -Phenyl, -SiR'₃ mit R' = -Alkyl) sind.

Unter einem Verfahren zur Herstellung höherer Hydridosilanverbindungen aus niederen Hydridosilanverbindungen ist weiterhin ein Verfahren zu verstehen, bei dem höhere Hydridosilanverbindungen, insbesondere Hydridosilane, durch Oligomerisierung niederer Hydridosilanverbindungen, insbesondere niederer Hydridosilane, hergestellt werden. Bei einer solchen Oligomerisierung niederer Hydridosilanverbindungen bzw. Hydridosilane wird formal betrachtet aus zwei gleichen oder unterschiedlichen niederen (ggf. substituierten) Hydridosilan(verbindungs)molekülen nach Abstraktion von Wasserstoff und/oder kleineren Hydridosilylresten ein höheres Hydridosilan(verbindungs)molekül aufgebaut.

Das erfindungsgemäße Verfahren zur Herstellung höherer Hydridosilanverbindungen hat den großen Vorteil, dass nicht zwangsläufig ein Metall-Katalysator eingesetzt werden muss. Bevorzugt, da so eine aufwändige Katalysatorabtrennung vermieden wird, wird das erfindungsgemäße Verfahren jedoch metall-katalysatorfrei durchgeführt. Entsprechend ist ein entsprechendes metall-katalysatorfreies Verfahren zur Herstellung höherer Hydridosilanverbindungen ebenfalls ein Gegenstand der vorliegenden Erfindung.

Bei den höheren Hydridosilanverbindungen, die nach dem erfindungsgemäßen Verfahren hergestellt werden können, handelt es sich um eine entsprechende Hydridosilanverbindung, die im Mittel mindestens 26 Siliciumatome aufweist (entsprechend einem gewichtsmittleren Molekulargewicht von mindestens 800 g/mol). Prinzipiell können mit dem erfindungsgemäßen Verfahren höhere Hydridosilanverbindungen mit beliebig hohen gewichtsmittleren Molekulargewichten hergestellt werden. Besonders gut geeignet ist es jedoch zur Herstellung von höheren Hydridosilanverbindungen mit einem gewichtsmittleren Molekulargewicht von 1000 - 10.000 g/mol, noch besser geeignet zur Herstellung von höheren Hydridosilanverbindungen mit einem gewichtsmittleren Molekulargewicht von 1.000 - 3.000 g/mol. Die entsprechenden gewichtsmittleren Molekulargewichte lassen sich dabei mit Standard-GPC-Techniken auf Basis von Polystyrol bestimmen

Unter der erfindungsgemäß einzusetzenden niederen Hydridosilanverbindung (I) ist dabei weiterhin ist eine Hydridosilanverbindung zu verstehen, die keine höhere Hydridosilanverbindung ist, d.h. eine Hydridosilanverbindung mit im Mittel weniger als oder gleich 10 Siliciumatomen. Bevorzugt, weil dies zu besonders guten Ergebnissen führt, ist die Umsetzung mit Hydridosilanverbindungen (I), die im Mittel 3 bis 10 Siliciumatomen aufweisen. Besonders gut lässt sich das erfindungsgemäße Verfahren weiterhin mit niederen Hydridosilanverbindungen durchführen, die niedere Hydridosilane sind.

Ganz besonders bevorzugt wird das erfindungsgemäße Verfahren mit niederen Hydridosilanen (I) ausgewählt aus der Gruppe der linearen bzw. verzweigten Hydridosilane der generischen Formel SiₙH₂ₙ₊₂ mit n = 3 - 10 durchgeführt. Diese lassen sich einfach herstellen und sind weiterhin in der Lage, zur Herstellung von höheren Hydridosilanen mit einer besonders guten Eignung für Beschichtungen in Halbleiteranwendungen. Noch weiter bevorzugt wird als niedere Hydridosilanverbindung (I) ein Hydridosilan ausgewählt aus der Gruppe bestehend aus SiH(SiH₃)₃, Si(SiH₃)₄, Si(SiH₃)₃(SiH₂SiH₃), Si(SiH₃)₂(SiH₂SiH₃)₂, Si(SiH₃)(SiH₂SiH₃)₃ und Si(SiH₂SiH₃)₄ eingesetzt, da dies zu noch besseren Ergebnissen führt. Ganz besonders gute Ergebnisse werden aufgrund der hohen Symmetrie des Moleküls und sich daraus ergebenden gleichmäßigen Oligomeren erzielt, wenn die mindestens eine Hydridosilanverbindung (I) Neopentasilan (Si(SiH₃)₄) ist.

Prinzipiell können als mindestens eine niedere Hydridosilanverbindung (I) eine Hydridosilanverbindung oder ein Gemisch mehrerer Hydridosilanverbindungen eingesetzt werden. Besonders gut kontrollier- und steuerbar ist die Reaktion jedoch, wenn nur eine niedere Hydridosilanverbindung (I), weiter bevorzugt nur ein niederes Hydridosilan eingesetzt wird.

Weiterhin wird die mindestens eine niedere Hydridosilanverbindung (I) in Gegenwart mindestens einer Hydridosilanverbindung (II) mit einem gewichtsmittleren Molekulargewicht von mindestens 500 g/mol zur Reaktion gebracht. Bei einer entsprechenden Hydridosilanverbindung (II) handelt es sich um eine höhere Hydridosilanverbindung. Da jedoch bei der Umsetzung der mindestens einen niederen Hydridosilanverbindung (I) mit der Hydridosilanverbindung (II) mit einem gewichtsmittleren Molekulargewicht von mindestens 500 g/mol eine durch die Hydridosilanverbindung (II) beschleunigte Oligomerisierung der Hydridosilanverbindung (I) oder eine Umsetzung der beiden Komponenten (I) und (II) erfolgt, hat das Verfahrensprodukt des erfindungsgemäßen Verfahren ein höheres gewichtsmittleres Molekulargewicht als das über GPC-Messungen ermittelbare gewichtsmittlere Molekulargewicht der die Komponenten (I) und (II) aufweisenden Reaktionsmischung.

Prinzipiell kann jede beliebige Hydridosilanverbindung (II) mit einem gewichtsmittleren Molekulargewicht von mindestens 500 g/mol eingesetzt werden. Bevorzugt weist diese Verbindung jedoch ein gewichtsmittleres Molekulargewicht von 500 - 5.000 g/mol, bevorzugt 1.000 - 4.000 g/mol auf.

Wie die mindestens eine Hydridosilanverbindung (II) hergestellt wurde, ist dabei prinzipiell nicht kritisch. Besonders gute Ergebnisse werden jedoch erzielt, wenn die mindestens eine Hydridosilanverbindung (II) mit einem gewichtsmittleren Molekulargewicht von mindestens 500 g/mol eine durch eine thermische Behandlung niederer Hydridosilane herstellbare Hydridosilanverbindung ist. Diese haben insbesondere gegenüber den über Bestrahlungsprozesse herstellbaren Hydridosilanverbindungen mit einem gewichtsmittleren Molekulargewicht von mindestens 500 g/mol den Vorteil, dass sich ihr gewichtsmittleres Molekulargewicht durch die Wahl der Reaktionsparameter relativ gut einstellen lässt, dass sie sich dennoch relativ schnell und mit geringem apparativem Aufwand herstellen lassen und zu vorteilhaften Schichteigenschaften führen.

Ganz besonders bevorzugt wird als mindestens eine Hydridosilanverbindung (II) ein durch eine thermische Behandlung niederer Hydridosilane der Formeln SiₙH₂ₙ (mit n = 3 - 10), SiₙH₂ₙ₊₂ (mit n = 3 - 10) bzw. SiₙH₂ₙ₋₂ (mit n = 6 - 10) hergestelltes Hydridosilan mit einem gewichtsmittleren Molekulargewicht von mindestens 500 g/mol eingesetzt.

Noch weiter bevorzugt wird als mindestens eine Hydridosilanverbindung (II) ein durch thermische Behandlung von Neopentasilan (Si₅H₁₂) herstellbares Hydridosilan mit einem gewichtsmittleren Molekulargewicht von 500 - 5000 g/mol, besonders bevorzugt 1000-4000 g/mol und ganz besonders bevorzugt 1500-3000 g/mol, eingesetzt.

Bevorzugte Temperaturen für die thermische Behandlung der niederen Hydridosilane zur Herstellung der höheren Hydridosilanverbindung (II) liegen dabei zwischen 30 und 250 °C, bevorzugt zwischen 90 und 180 °C, besonders bevorzugt zwischen 110 und 160 °C. Bevorzugte Reaktionszeiten liegen zwischen 400 und 1.500 Minuten, bevorzugt zwischen 450 und 1.000 Minuten.

Da die entsprechenden Verfahren zur Herstellung der Hydridosilanverbindung (II) nicht zu einem einer einzigen Strukturformel entsprechenden Verfahrensprodukt führen, ist vorliegend unter "einer" höheren Hydridosilanverbindung (II) ein Gemisch von Hydridosilanverbindungen zu verstehen, das eine Molekulargewichtsverteilung aufweist und aus einem einzigen Syntheseansatz stammt. Entsprechend handelt es sich um mehr als "eine" höhere Hydridosilanverbindung (II), wenn ein Gemisch von aus unterschiedlichen Syntheseansätzen stammenden Hydridosilanverbindungen eingesetzt wird.
Bevorzugt wird im Sinne dieser Definitionen nur "eine" Hydridosilanverbindung (II) eingesetzt, da dies entsprechend eine besonders gute Steuerung der Molekulargewichtsverteilung der herzustellenden höheren Hydridosilanverbindung ermöglicht.

Besonders schnelle Reaktionszeiten werden erzielt, wenn die mindestens eine Hydridosilanverbindung (II) in Gewichtsprozentanteilen von 0,01 - 10 Gew.-%, bevorzugt 0,5 - 5 Gew.-% bezogen auf die Gesamtmasse von niederer Hydridosilanverbindung (I) und Hydridosilanverbindung (II) eingesetzt wird.

Das Verfahren zur Umsetzung der mindestens eine niedere Hydridosilanverbindung (I) in Gegenwart der mindestens einen Hydridosilanverbindung (II) kann im Prinzip beliebig durchgeführt werden. Besonders bevorzugt wird, weil dies besonders einfach für die Ausgestaltung des Verfahrens ist und weiterhin zu besonders guten Ausbeuten führt, das erfindungsgemäße Verfahren als Flüssigphasenverfahren, d.h. als ein Verfahren, bei dem das die mindestens eine niedere Hydridosilanverbindung (I) und die mindestens eine Hydridosilanverbindung (II) enthaltende bzw. daraus bestehende Reaktionsgemisch bei der Reaktion in flüssiger Phase vorliegt, durchgeführt.

Bevorzugt wird dabei bei der Reaktion in Flüssigphase ein Lösemittel eingesetzt, da dadurch die Molekulargewichtsverteilung beeinflusst, die Reaktion besonders gut kontrolliert und eine sehr homogene Molekulargewichtsverteilung erhalten werden kann. Bevorzugt einsetzbare Lösemittel können dabei aus der Gruppe bestehend aus linearen, verzweigten bzw. cyclischen, gesättigten, ungesättigten oder aromatischen Kohlenwasserstoffen mit 1 - 12 Kohlenstoffatomen, Alkoholen, Ethern, Carbonsäuren, Estern, Nitrilen, Amiden, Sulfoxiden und Wasser ausgewählt werden.

Zur Erzielung besonders guter Ergebnisse wird das Lösemittel dabei bevorzugt in Anteilen 20 - 80 Gew.-% bezogen auf die Gesamtmasse der Zusammensetzung eingesetzt.

Die Reaktion wird weiterhin thermisch durchgeführt. Der dafür erforderliche Energieeintrag kann dabei mit Mikrowellenstrahlung, IR-Strahlung sowie mittels einer Heizplatte, eines Thermostaten, eines Heizmantels oder eines Ofens eingebracht werden. Zur Erzielung besonders guter Ergebnisse wird dabei die Reaktion bei Temperaturen von 30 - 250 °C, bevorzugt 90 - 180 °C, besonders bevorzugt 110 - 160 °C (Temperatur des Reaktionsgemisches) durchgeführt

Bevorzugte Reaktionszeiten liegen zwischen 0,1 und 12 h, weiter bevorzugt zwischen 1 und 8 h, ganz besonders bevorzugt zwischen 2 und 6 h.

Zur Erzielung bevorzugter höherer Hydridosilanverbindungen, mit denen besonders gut dotierte Siliciumschichten hergestellt werden können, kann dem Reaktionsgemisch vor oder während der Reaktion bevorzugt mindestens ein Dotierstoff ausgewählt aus der Gruppe bestehend aus B₂H₆, BHₓR₃₋ₓ (mit x = 0 - 2 und R = C₁₋C₁₀-Alkylrest, ungesättigter cyclischer C₂-C₁₀-Alkylrest), ether- oder aminkomplexiertes BHₓR₃₋ₓ (mit x = 0 - 3 und R = C₁₋C₁₀-Alkylrest, ungesättigter cyclischer C₂-C₁₀-Alkylrest), Si₅H₉BR₂ (R = H, Ph, C₁₋C₁₀-Alkylrest), Si₄H₉BR₂ (R = H, Ph, C₁₋C₁₀-Alkylrest), roter Phosphor, weißer Phosphor (P₄), PHₓR₃₋ₓ (mit x = 0 - 3 und R = Ph, SiMe₃, C₁₋C₁₀-Alkylrest), P₇(SiR₃)₃ (R = H, Ph, C₁₋C₁₀-Alkylrest), Si₅H₉PR₂ (R = H, Ph, C₁₋C₁₀-Alkylrest) und Si₄H₉PR₂ (R = H, Ph, C₁₋C₁₀-Alkylrest) zugegeben werden.

Bevorzugt wird dabei der mindestens eine Dotierstoff in Mengen von 0,01 - 20 Gew.-% bezogen auf die Gesamtmasse der Zusammensetzung zugesetzt. Besonders gut reine Siliciumschichten können mit den nach dem erfindungsgemäßen Verfahren erhältlichen Hydridosilane hergestellt werden. Die Verwendung der erfindungsgemäß herstellbaren höheren Hydridosilanverbindungen, bevorzugt der erfindungsgemäß herstellbaren höheren Hydridosilane zur Erzeugung optoelektronischer Bauteilschichten, elektronischer Bauteilschichten oder siliciumhaltiger Schichten, insbesondere zur Herstellung elementarer Siliciumschichten wird offenbart, Die nachfolgenden Beispiele sollen den Gegenstand der vorliegenden Erfindung verdeutlichen. Sie wirken jedoch nicht beschränkend.

### Beispiele:

Alle Beispiele werden unter Schutzgasatmosphäre durchgeführt. H₂O, O₂ < 1 ppm

### Erfindungsgemäßes Beispiel:

Thermische Behandlung von Neopentasilan Si(SiH₃)₄ durch Animpfen:
0,5 g einer Hydridosilanverbindung (II) (hergestellt gemäß Vergleichsbeispiel 1) werden in eine Glasapparatur gegeben und auf 155 °C aufgeheizt. Dann werden 10 g Neopentasilan dazugegeben und das Reaktionsgemisch 200 Minuten thermisch behandelt. Es entstehen ca. 7 g eines höheren Hydridosilans, das gemäß GPC-Messung nach Abkühlen ein gewichtsmittleres Molekulargewicht von 2130 g/mol aufweist.

### Vergleichsbeispiel 1)

thermische Behandlung von Neopentasilan Si(SiH₃)₄:
ca. 10 g Neopentasilan werden in eine Glasapparatur gegeben und 480 Minuten auf 154 °C erhitzt. Es entsteht ein Hydridosilan, das gemäß GPC-Messung nach Abkühlen ein gewichtsmittleres Molekulargewicht von 2.200 g/mol aufweist.

### Vergleichsbeispiel 2)

UV Behandlung von Neopentasilan Si(SiH₃)₄:
2 g Neopentasilan werden in ein Glasgefäß gegeben und 840 Minuten mit UV Licht bestrahlt. Es entstehen geringe Mengen ein Hydridosilans, das gemäß GPC-Messung ein gewichtsmittleres Molekulargewicht von 930 g/mol aufweist.

## Patentansprüche

1. Verfahren zur Herstellung höherer Hydridosilanverbindungen, die mindestens 26 Siliciumatome und ein gewichtsmittleres Molekulargewicht von mindestens 800 g/mol aufweisen, aus niederen Hydridosilanverbindungen,
**dadurch gekennzeichnet, dass**
- mindestens eine niedere Hydridosilanverbindung (I), die im Mittel weniger als oder gleich 10 Siliciumatome aufweist,
- in Gegenwart mindestens einer Hydridosilanverbindung (II) mit einem gewichtsmittleren Molekulargewicht von mindestens 500 g/mol
- thermisch zur Reaktion gebracht wird.

2. Verfahren nach Anspruch 1,
**dadurch gekennzeichnet, dass**
die mindestens eine niederes Hydridosilanverbindung (I) ein lineares oder verzweigtes Hydridosilan der generischen Formel SiₙH₂ₙ₊₂ mit n = 3 - 10 ist.

3. Verfahren nach Anspruch 2,
**dadurch gekennzeichnet, dass**
das mindestens eine Hydridosilan Neopentasilan ist.

4. Verfahren nach einem der vorhergehenden Ansprüche,
**dadurch gekennzeichnet, dass**
die Hydridosilanverbindung (II) ein gewichtsmittleres Molekulargewicht von 500 - 5.000, bevorzugt 1.000 - 4.000 g/mol aufweist.

5. Verfahren nach einem der vorhergehenden Ansprüche,
**dadurch gekennzeichnet, dass**
die mindestens eine Hydridosilanverbindung (II) eine durch eine thermische Behandlung niederer Hydridosilane herstellbare Hydridosilanverbindung ist.

6. Verfahren nach Anspruch 5,
**dadurch gekennzeichnet, dass**
die mindestens eine Hydridosilanverbindung (II) ein durch eine thermische Behandlung niederer Hydridosilane der Formeln SiₙH₂ₙ (mit n = 3 - 10), SiₙH₂ₙ₊₂ (mit n = 3 - 10) bzw. SiₙH₂ₙ₋₂ (mit n = 6 - 10) hergestelltes Hydridosilan mit einem gewichtsmittleren Molekulargewicht von mindestens 500 g/mol ist.

7. Verfahren nach einem der vorhergehenden Ansprüche,
**dadurch gekennzeichnet, dass**
die mindestens eine Hydridosilanverbindung (II) in Gewichtsprozentanteilen von 0,01 - 10 Gew.-%, bevorzugt 0,5 - 5 Gew.-% bezogen auf die Gesamtmasse von niederer Hydridosilanverbindung (I) und Hydridosilanverbindung (II) eingesetzt wird.

8. Verfahren nach einem der vorhergehenden Ansprüche,
**dadurch gekennzeichnet, dass**
das Verfahren zur Herstellung höherer Hydridosilanverbindungen als Flüssigphasenverfahren durchgeführt wird.

9. Verfahren nach Anspruch 8,
**dadurch gekennzeichnet, dass**
das Verfahren in Gegenwart mindestens eines Lösemittels durchgeführt wird.

10. Verfahren nach Anspruch 9,
**dadurch gekennzeichnet, dass**
das Lösemittel in Anteilen 20 - 80 Gew.-% bezogen auf die Gesamtmasse der Zusammensetzung eingesetzt wird.

11. Verfahren nach einem der vorhergehenden Ansprüche,
**dadurch gekennzeichnet, dass**
die Reaktion bei Temperaturen von 30 - 250 °C, bevorzugt 90 - 180 °C, besonders bevorzugt 110 - 160 °C durchgeführt wird.

12. Verfahren nach einem der vorhergehenden Ansprüche,
**dadurch gekennzeichnet, dass**
die Reaktionszeiten zwischen 0,1 und 12 h, weiter bevorzugt zwischen 1 und 8 h, ganz besonders bevorzugt zwischen 2 und 6 h betragen.

13. Verfahren nach einem der vorhergehenden Ansprüche,
**dadurch gekennzeichnet, dass**
dem Reaktionsgemisch vor oder während der Reaktion mindestens ein Dotierstoff ausgewählt aus der Gruppe bestehend aus B₂H₆, BHₓR₃₋ₓ (mit x = 0 - 2 und R = C₁₋C₁₀-Alkylrest, ungesättigter cyclischer C₂-C₁₀-Alkylrest), ether- oder aminkomplexiertes BHₓR₃₋ₓ (mit x = 0 - 3 und R = C₁₋C₁₀-Alkylrest, ungesättigter cyclischer C₂-C₁₀-Alkylrest), Si₅H₉BR₂ (R = H, Ph, C₁₋C₁₀-Alkylrest), Si₄H₉BR₂ (R = H, Ph, C₁₋C₁₀-Alkylrest), roter Phosphor, weißer Phosphor (P₄), PHₓR₃₋ₓ (mit x = 0 - 3 und R = Ph, SiMe₃, C₁₋C₁₀-Alkylrest), P₇(SiR₃)₃ (R = H, Ph, C₁₋C₁₀-Alkylrest), Si₅H₉PR₂ (R = H, Ph, C₁₋C₁₀-Alkylrest) und Si₄H₉PR₂ (R = H, Ph, C₁₋C₁₀-Alkylrest) zugegeben wird.

## Claims

1. Process for preparing high order hydridosilane compounds, which have at least 26 silicon atoms and a weight-average molecular weight of at least 800 g/mol, from low order hydridosilane compounds, **characterized in that**
- at least one low order hydridosilane compound (I), which has on average less than or equal to 10 silicon atoms,
- is thermally reacted
- in the presence of at least one hydridosilane compound (II) having a weight average molecular weight of at least 500 g/mol.

2. Process according to Claim 1, **characterized in that** the at least one low order hydridosilane compound (I) is a linear or branched hydridosilane of the generic formula SiₙH₂ₙ₊₂ with n = 3 - 10.

3. Process according to Claim 2, **characterized in that** the at least one hydridosilane is neopentasilane.

4. Process according to any preceding claim, **characterized in that** the hydridosilane compound (II) has a weight average molecular weight of 500-5000 and preferably 1000-4000 g/mol.

5. Process according to any preceding claim, **characterized in that** the at least one hydridosilane compound (II) is a hydridosilane compound obtainable by a thermal treatment of low order hydridosilanes.

6. Process according to Claim 5, **characterized in that** the at least one hydridosilane compound (II) is a hydridosilane having a weight average molecular weight of at least 500 g/mol and obtained by a thermal treatment of low order hydridosilanes of the formulae SiₙH₂ₙ (with n = 3 - 10), SiₙH₂ₙ₊₂ (with n = 3 - 10) and SiₙH₂ₙ₋₂ (with n = 6 - 10) respectively.

7. Process according to any preceding claim, **characterized in that** the at least one hydridosilane compound (II) is used in weight percentage fractions of 0.01-10% by weight and preferably 0.5-5% by weight based on the total mass of low order hydridosilane compound (I) and hydridosilane compound (II).

8. Process according to any preceding claim, **characterized in that** the process for preparing high order hydridosilane compounds is conducted as liquid phase process.

9. Process according to Claim 8, **characterized in that** the process is conducted in the presence of at least one solvent.

10. Process according to Claim 9, **characterized in that** the solvent is used in proportions of 20-80% by weight based on the total mass of the composition.

11. Process according to any preceding claim, **characterized in that** the reaction is conducted at temperatures of 30-250°C, preferably 90-180°C and more preferably 110-160°C.

12. Process according to any preceding claim, **characterized in that** the reaction times are between 0.1 and 12 h, more preferably between 1 and 8 h and even more preferably between 2 and 6 h.

13. Process according to any preceding claim, **characterized in that** at least one dopant selected from the group consisting of B₂H₆, BHₓR₃₋ₓ (with x = 0-2 and R = C₁₋C₁₀-alkyl, unsaturated cyclic C₂-C₁₀-alkyl), ether- or amine-complexed BHₓR₃₋ₓ (with x = 0-3 and R = C₁₋C₁₀-alkyl, unsaturated cyclic C₂-C₁₀-alkyl), Si₅H₉BR₂ (R = H, Ph, C₁₋C₁₀-alkyl), Si₄H₉BR₂ (R = H, Ph, C₁₋C₁₀-alkyl), red phosphorus, white phosphorus (P₄), PHₓR₃₋ₓ (with x = 0-3 and R = Ph, SiMe₃, C₁₋C₁₀-alkyl), P₇(SiR₃)₃ (R = H, Ph, C₁₋C₁₀-alkyl), Si₅H₉PR₂ (R = H, Ph, C₁₋C₁₀-alkyl) and Si₄H₉PR₂ (R = H, Ph, C₁₋C₁₀-alkyl) is added to the reaction mixture before or during the reaction.

## Revendications

1. Procédé de fabrication de composés d'hydridosilane supérieurs, qui comprennent au moins 26 atomes de silicium et présentent un poids moléculaire moyen en poids d'au moins 800 g/mol, à partir de composés d'hydridosilane inférieurs, **caractérisé en ce que**
- au moins un composé d'hydridosilane inférieur (I), qui comprend en moyenne un nombre inférieur ou égal à 10 atomes de silicium,
- est mis en réaction thermiquement
- en présence d'au moins un composé d'hydridosilane (II) ayant un poids moléculaire moyen en poids d'au moins 500 g/mol.

2. Procédé selon la revendication 1, **caractérisé en ce que** ledit au moins un composé d'hydridosilane inférieur (I) est un hydridosilane linéaire ou ramifié de formule générique SiₙH₂ₙ₊₂ avec n = 3 à 10.

3. Procédé selon la revendication 2, **caractérisé en ce que** ledit au moins un hydridosilane est le néopentasilane.

4. Procédé selon l'une quelconque des revendications précédentes, **caractérisé en ce que** le composé d'hydridosilane (II) présente un poids moléculaire moyen en poids de 500 à 5 000, de préférence de 1 000 à 4 000 g/mol.

5. Procédé selon l'une quelconque des revendications précédentes, **caractérisé en ce que** ledit au moins un composé d'hydridosilane (II) est un composé d'hydridosilane pouvant être fabriqué par un traitement thermique d'hydridosilanes inférieurs.

6. Procédé selon la revendication 5, **caractérisé en ce que** ledit au moins un composé d'hydridosilane (II) est un hydridosilane fabriqué par un traitement thermique d'hydridosilanes inférieurs de formule SiₙH₂ₙ (avec n = 3 à 10), SiₙH₂ₙ₊₂ (avec n = 3 à 10) ou SiₙH₂ₙ₋₂ (avec n = 6 à 10) ayant un poids moléculaire moyen en poids d'au moins 500 g/mol.

7. Procédé selon l'une quelconque des revendications précédentes, **caractérisé en ce que** ledit au moins un composé d'hydridosilane (II) est utilisé en proportions en pourcentage en poids de 0,01 à 10 % en poids, de préférence de 0,5 à 5 % en poids, par rapport à la masse totale du composé d'hydridosilane inférieur (I) et du composé d'hydridosilane (II).

8. Procédé selon l'une quelconque des revendications précédentes, **caractérisé en ce que** le procédé de fabrication de composés d'hydridosilane supérieurs est réalisé sous la forme d'un procédé en phase liquide.

9. Procédé selon la revendication 8, **caractérisé en ce que** le procédé est réalisé en présence d'au moins un solvant.

10. Procédé selon la revendication 9, **caractérisé en ce que** le solvant est utilisé en proportions de 20 à 80 % en poids, par rapport à la masse totale de la composition.

11. Procédé selon l'une quelconque des revendications précédentes, **caractérisé en ce que** la réaction est réalisée à des températures de 30 à 250 °C, de préférence de 90 à 180 °C, de manière particulièrement préférée de 110 à 160 °C.

12. Procédé selon l'une quelconque des revendications précédentes, **caractérisé en ce que** les durées de réactions sont comprises entre 0,1 et 12 h, de manière davantage préférée entre 1 et 8 h, de manière tout particulièrement préférée entre 2 et 6 h.

13. Procédé selon l'une quelconque des revendications précédentes, **caractérisé en ce qu'**au moins un agent dopant choisi dans le groupe constitué par B₂H₆, BHₓR₃₋ₓ (avec x = 0 à 2 et R = radical alkyle en C₁-C₁₀, radical alkyle en C₂-C₁₀ cyclique insaturé), BHₓR₃₋ₓ complexé par un éther ou une amine (avec x = 0 à 3 et R = radical alkyle en C₁-C₁₀, radical alkyle en C₂-C₁₀ cyclique insaturé), Si₅H₉BR₂ (R = H, Ph, radical alkyle en C₁-C₁₀), Si₄H₉BR₂ (R = H, Ph, radical alkyle en C₁-C₁₀), phosphore rouge, phosphore blanc (P₄), PHₓR₃₋ₓ (avec x = 0 à 3 et R = Ph, SiMe₃, radical alkyle en C₁-C₁₀), P₇(SiR₃)₃ (R = H, Ph, radical alkyle en C₁-C₁₀), Si₅H₉PR₂ (R = H, Ph, radical alkyle en C₁-C₁₀) et Si₄H₉PR₂ (R = H, Ph, radical alkyle en C₁-C₁₀) est ajouté au mélange réactionnel avant ou pendant la réaction.
